# EUROPEAN PATENT APPLICATION

(11) **EP 4 770 196 A1**
(43) Date of publication of application: **01.07.2026**
(21) Application number: 24872478.3
(22) Date of filing: 27.09.2024
(51) Int. Cl.: H04W 36/08, H04W 92/20

(54) **COMMUNICATION METHOD AND NETWORK NODE**

(30) Priority: 29.09.2023 JP 2023170459
(71) Applicant: Kyocera Corporation, Kyoto-shi, Kyoto 612-8501 (JP)
(72) Inventor: FUJISHIRO, Masato, Kyoto-shi, Kyoto 612-8501 (JP)
(74) Representative: Viering, Jentschura & Partner mbB Patent- und Rechtsanwälte
(86) International application number: PCT/JP2024/034575
(87) International publication number: WO 2025/070695

(57) **Abstract**

A communication method executed by a network node in a mobile communication system, and includes the steps of: performing wireless communication with a user equipment in an RRC connected state in a first cell of the network node; and transmitting, to another network node, a request message requesting change of a serving cell of the user equipment from the first cell to a second cell of the other network node. When changing the serving cell through LTM, the network node transmits the request message indicating the change of the serving cell through the LTM. The LTM is a procedure indicating cell switch from the network node to the user equipment through a MAC CE.

## Description

### TECHNICAL FIELD

The present disclosure relates to a communication method and a user equipment used in a mobile communication system.

### BACKGROUND OF INVENTION

The 3rd Generation Partnership Project (3GPP) (trade name, the same applies to the following descriptions) has defined the technical specifications of New Radio (NR) that is a radio access technology of the fifth generation (5G). In a mobile communication system in 3GPP, change of a serving cell of a user equipment in a Radio Resource Control (RRC) connected state is indicated by transmitting a message (so-called handover command) of an RRC layer corresponding to a layer 3 (L3) from a network node to the user equipment.

On the other hand, in Release 18 of the 3GPP standards (3GPP Release 18), standardization of technical specifications of L1/L2-Triggered Mobility (LTM) has been in progress. LTM is a procedure in which a network node receives a Layer 1 (L1) measurement report from a user equipment, and the network node changes, based on the L1 measurement report, a serving cell of the user equipment through a cell switch command signalled by the network node to the user equipment through a Media Access Control (MAC) Control Element (CE).

In 3GPP Release 18, LTM is limited to serving cell change between cells belonging to the same network node, and does not support serving cell change between cells belonging to different network nodes (i.e., inter-network node LTM).

### CITATION LIST

### NON-PATENT LITERATURE

Non-Patent Document 1: 3GPP Contribution R2-2309335

### SUMMARY

The present disclosure relates to a communication method and a network node for implementing inter-network node LTM.

In a first aspect according to the present disclosure, a communication method is a communication method executed by a network node in a mobile communication system, and includes the steps of: performing wireless communication with a user equipment in a Radio Resource Control (RRC) connected state in a first cell of the network node; and transmitting, to another network node, a request message requesting change of a serving cell of the user equipment from the first cell to a second cell of the other network node. The network node is configured to, when changing the serving cell through L1/L2-Triggered Mobility (LTM), transmit the request message indicating the change of the serving cell through the LTM. The LTM is a procedure indicating cell switch from the network node to the user equipment through a Medium Access Control (MAC) Control Element (CE).

In a second aspect according to the present disclosure, a network node is a network node used in a mobile communication system, and includes: a first communicator configured to perform wireless communication with a user equipment in a Radio Resource Control (RRC) connected state in a first cell of the network node; and a second communicator configured to transmit, to another network node, a request message requesting change of a serving cell of the user equipment from the first cell to a second cell of the other network node. The second communicator is configured to, when changing the serving cell through L1/L2-Triggered Mobility (LTM), transmit the request message indicating the change of the serving cell through the LTM. The LTM is a procedure indicating cell switch from the network node to the user equipment through a Medium Access Control (MAC) Control Element (CE).

### BRIEF DESCRIPTION OF THE DRAWINGS

FIG. 1 is a diagram illustrating a configuration example of a mobile communication system according to an embodiment.
FIG. 2 is a diagram illustrating a configuration example of a UE (user equipment) according to THE embodiment.
FIG. 3 is a diagram illustrating a configuration example of a gNB (network node) according to the embodiment.
FIG. 4 is a diagram illustrating a configuration of a protocol stack of a radio interface of a user plane handling data.
FIG. 5 is a diagram illustrating a configuration of a protocol stack of a radio interface of a control plane handling signaling (control signal).
FIG. 6 is a diagram illustrating an example of a procedure of LTM whose specification is being developed in 3GPP Release 18.
FIG. 7 is a diagram for describing an operation scenario for the mobile communication system according to the embodiment.
FIG. 8 is a diagram illustrating a specific example of an operation of the mobile communication system according to the embodiment.

### DESCRIPTION OF EMBODIMENTS

According to an embodiment, a mobile communication system is described with reference to the drawings. In the description of the drawings, the same or similar parts are denoted by the same or similar reference signs.

### (1) Configuration of Mobile Communication System

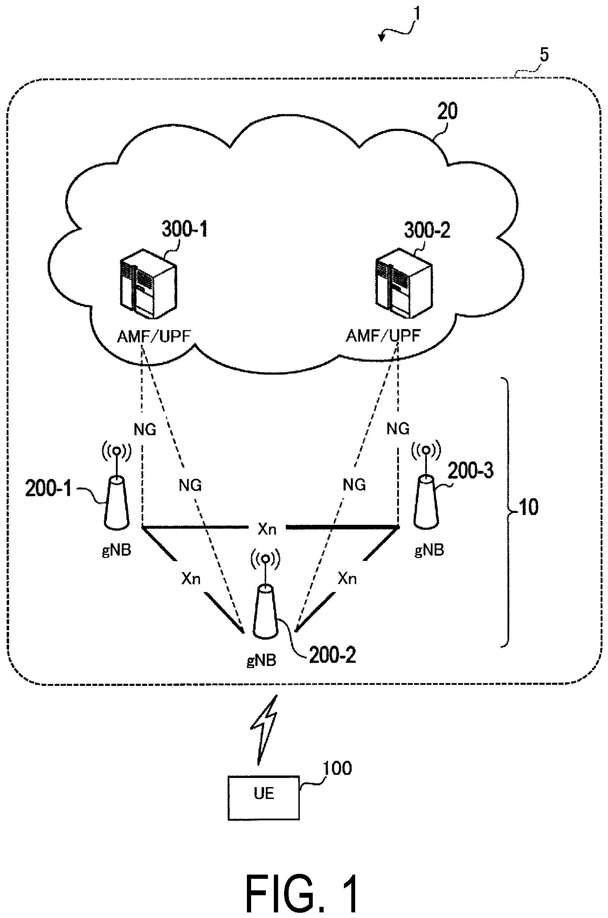

FIG. 1 is a diagram illustrating a configuration example of a mobile communication system 1 according to the embodiment. The mobile communication system 1 complies with the 5th Generation System (5GS) of the 3GPP standards. The description below takes the 5GS as an example, but Long Term Evolution (LTE) system may be at least partially applied to the mobile communication system. Alternatively, a sixth generation (6G) system may be at least partially applied to the mobile communication system.

The mobile communication system 1 includes a User Equipment (UE) 100, a 5G radio access network (Next Generation Radio Access Network (NG-RAN)) 10, and a 5G Core Network (5GC) 20. Hereinafter, the NG-RAN 10 may be simply referred to as the RAN 10. The 5GC 20 may be simply referred to as a Core Network (CN) 20. The RAN 10 and the CN 20 configure a network 5 of the mobile communication system 1.

The UE 100 is a mobile wireless communication apparatus. The UE 100 may be any apparatus as long as the UE 100 is used by a user. Examples of the UE 100 include a mobile phone terminal (including a smartphone) or a tablet terminal, a notebook PC, a communication module (including a communication card or a chipset), a sensor or an apparatus provided on a sensor, a vehicle or an apparatus provided on a vehicle (Vehicle UE), and a flying object or an apparatus provided on a flying object (Aerial UE).

The NG-RAN 10 includes a base station (referred to as "gNB" in 5G system) 200 that is a type of network node. The gNBs 200 are interconnected via an Xn interface which is an inter-base station interface. Each gNB 200 manages one or more cells. The gNB 200 performs wireless communication with the UE 100 that has established a connection to the cell of the gNB 200. The gNB 200 has a Radio Resource Management (RRM) function, a function of routing user data (hereinafter simply referred to as "data"), a measurement control function for mobility control and scheduling, and the like. The "cell" is used as a term representing a minimum unit of a wireless communication area. The "cell" is also used as a term representing a function or a resource for performing wireless communication with the UE 100. One cell belongs to one carrier frequency (hereinafter, simply referred to as a "frequency").

Note that the gNB can be also connected to an Evolved Packet Core (EPC) corresponding to a core network of LTE. An LTE base station can also be connected to the 5GC. The LTE base station and the gNB can be also connected via an inter-base station interface.

The 5GC 20 includes an Access and Mobility Management Function (AMF) and a User Plane Function (UPF) 300. The AMF performs various types of mobility controls and the like for the UE 100. The AMF manages mobility of the UE 100 by communicating with the UE 100 by using Non-Access Stratum (NAS) signaling. The UPF controls data transfer. The AMF and UPF are connected to the gNB 200 via an NG interface which is an interface between a base station and the core network.

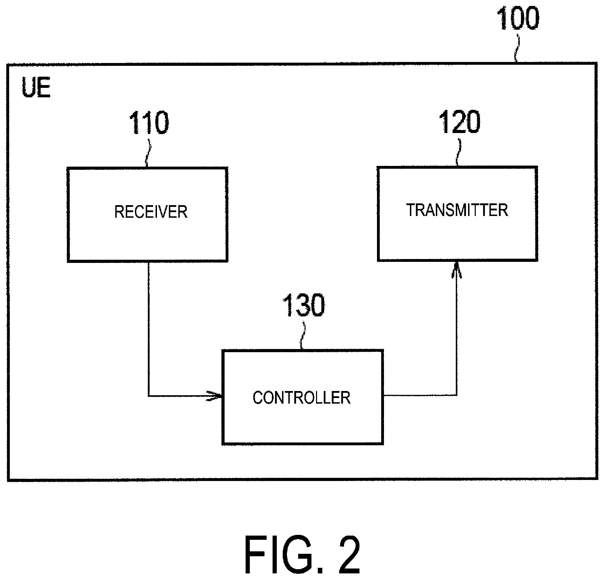

FIG. 2 is a diagram illustrating a configuration example of the UE 100 (user equipment) according to the embodiment. The UE 100 includes a receiver 110, a transmitter 120, and a controller 130. The receiver 110 and the transmitter 120 constitute a wireless communicator that performs wireless communication with the gNB 200.

The receiver 110 performs various receptions under the control of the controller 130. The receiver 110 includes an antenna and a reception device. The reception device converts a radio signal received through the antenna into a baseband signal (a reception signal) and outputs the resulting signal to the controller 130.

The transmitter 120 performs various transmissions under the control of the controller 130. The transmitter 120 includes an antenna and a transmission device. The transmission device converts a baseband signal (a transmission signal) output by the controller 130 into a radio signal, and transmits the resulting signal through the antenna.

The controller 130 performs various controls and processes in the UE 100. Such processing includes processing of respective layers to be described below. The operations of the UE 100 described above and below may be operations under the control of a controller 230. The controller 130 includes at least one processor and at least one memory. The memory stores a program to be executed by the processor and information to be used for processing in the processor. The processor may include a baseband processor and a Central Processing Unit (CPU). The baseband processor performs modulation and demodulation, coding and decoding, and the like of a baseband signal. The CPU executes the program stored in the memory to thereby perform various types of processing.

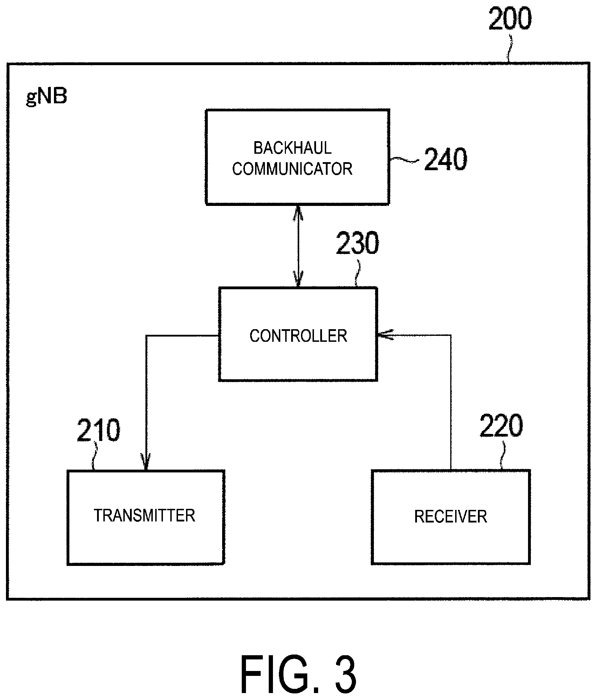

FIG. 3 is a diagram illustrating a configuration example of the gNB 200 (network node) according to the embodiment. The gNB 200 includes a transmitter 210, a receiver 220, the controller 230, and a backhaul communicator 240. The transmitter 210 and the receiver 220 constitute a wireless communicator that performs wireless communication with the UE 100. The backhaul communicator 240 constitutes a network communicator that performs communication with the CN 20.

The transmitter 210 performs various transmissions under the control of the controller 230. The transmitter 210 includes an antenna and a transmission device. The transmission device converts a baseband signal (a transmission signal) output by the controller 230 into a radio signal, and transmits the resulting signal through the antenna.

The receiver 220 performs various types of reception under control of the controller 230. The receiver 220 includes an antenna and a reception device. The reception device converts a radio signal received through the antenna into a baseband signal (a reception signal) and outputs the resulting signal to the controller 230.

The controller 230 performs various types of control and processing in the gNB 200. Such processing includes processing of respective layers to be described below. The operations of the gNB 200 described above and below may be also performed under the control of the controller 230. The controller 230 includes at least one processor and at least one memory. The memory stores a program to be executed by the processor and information to be used for processing in the processor. The processor may include the baseband processor and the CPU. The baseband processor performs modulation and demodulation, coding and decoding, and the like of a baseband signal. The CPU executes the program stored in the memory to thereby perform various types of processing.

The backhaul communicator 240 is connected to a neighboring base station via an Xn interface which is an inter-base station interface. The backhaul communicator 240 is connected to the AMF/UPF 300 via an NG interface which is an interface between a base station and the core network. Note that the gNB 200 may include a Central Unit (CU) and a Distributed Unit (DU) (i.e., functions are divided), and both units may be connected via an F1 interface that is a fronthaul interface.

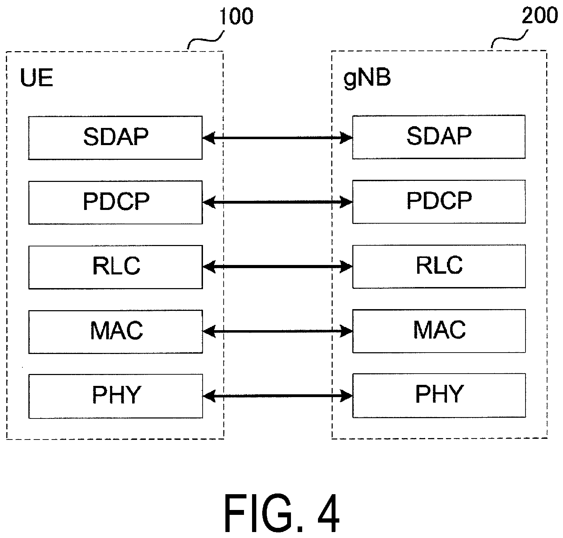

FIG. 4 is a diagram illustrating a configuration of a protocol stack of a radio interface of a user plane handling data.

A radio interface protocol of the user plane includes a physical (PHY) layer, a Medium Access Control (MAC) layer, a Radio Link Control (RLC) layer, a Packet Data Convergence Protocol (PDCP) layer, and a Service Data Adaptation Protocol (SDAP) layer.

The PHY layer performs encoding/decoding, modulation/demodulation, antenna mapping/demapping, and resource mapping/demapping. Data and control information are transmitted between the PHY layer of the UE 100 and the PHY layer of the gNB 200 via a physical channel. Note that the PHY layer of the UE 100 receives Downlink Control Information (DCI) transmitted from the gNB 200 over a Physical Downlink Control CHannel (PDCCH). Specifically, the UE 100 performs blind decoding of the PDCCH by using a Radio Network Temporary Identifier (RNTI) and acquires a successfully decoded DCI as a DCI addressed to the UE. CRC parity bits scrambled by the RNTI are added to the DCI transmitted from the gNB 200.

The MAC layer performs priority control of data, retransmission processing through hybrid ARQ (HARQ: Hybrid Automatic Repeat reQuest), a random access procedure, and the like. Data and control information are transmitted between the MAC layer of the UE 100 and the MAC layer of the gNB 200 via a transport channel. The MAC layer of the gNB 200 includes a scheduler. The scheduler determines transport formats (transport block sizes, Modulation and Coding Schemes (MCSs)) in the uplink and the downlink and resource blocks to be allocated to the UE 100.

The RLC layer transmits data to the RLC layer on the reception side by using functions of the MAC layer and the PHY layer. Data and control information are transmitted between the RLC layer of the UE 100 and the RLC layer of the gNB 200 via a logical channel.

The PDCP layer performs header compression/decompression, encryption/decryption, and the like.

The SDAP layer performs mapping between an IP flow as the unit of Quality of Service (QoS) control performed by a core network and a radio bearer as the unit of QoS control performed by an Access Stratum (AS). Note that, when the RAN is connected to the EPC, the SDAP need not be provided.

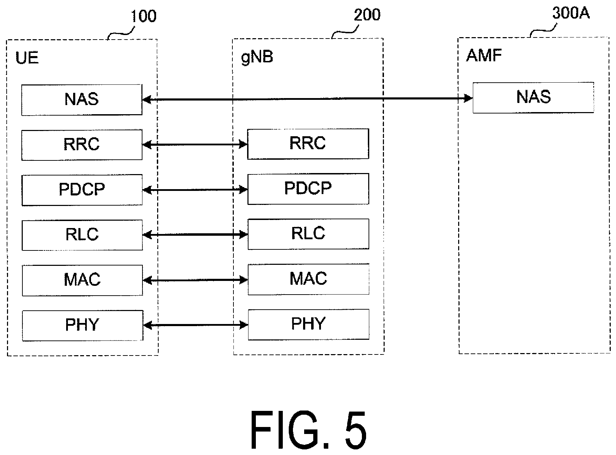

FIG. 5 is a diagram illustrating a configuration of a protocol stack of a radio interface of a control plane handling signaling (a control signal).

The protocol stack of the radio interface of the control plane includes a Radio Resource Control (RRC) layer and a Non-Access Stratum (NAS) layer instead of the SDAP layer illustrated in FIG. 4.

RRC signaling for various configurations is transmitted between the RRC layer of the UE 100 and the RRC layer of the gNB 200. The RRC layer controls a logical channel, a transport channel, and a physical channel according to establishment, re-establishment, and release of a radio bearer. When connection (RRC connection) is established between RRC of the UE 100 and RRC of the gNB 200, the UE 100 is in an RRC connected state. When connection (RRC connection) is not established between the RRC of the UE 100 and the RRC of the gNB 200, the UE 100 is in an RRC idle state. When the connection between the RRC of the UE 100 and the RRC of the gNB 200 is suspended, the UE 100 is in an RRC inactive state.

The NAS layer (also simply referred to as a "NAS"), which is located above the RRC layer, performs session management, mobility management, and the like. NAS signaling is transmitted between the NAS layer of the UE 100 and the NAS layer of an AMF 300A. Note that the UE 100 includes an application layer other than the protocol of the radio interface. The layer below the NAS layer is referred to as an AS layer (also simply referred to as an "AS").

### (2) Overview of LTM

The mobile communication system according to the embodiment supports L1/L2-Triggered Mobility (LTM).

The LTM is a technology for reducing delay in mobility (specifically, delay in serving cell change) compared to a general handover procedure by triggering cell switch through signaling of a Layer 1 (L1) and/or a Layer 2 (L2) that are lower layers. In a general handover procedure, a Measurement Report message that is an RRC message is transmitted from the UE 100 to the gNB 200, the gNB 200 determines handover of the UE 100 based on the Measurement Report message, and a handover command that is an RRC message (specifically, an RRC reconfiguration message) is transmitted from the gNB 200 to the UE 100, thereby indicating handover.

Contrarily, in the LTM, firstly, the gNB 200 prepares an LTM candidate cell configuration relating to a switch destination cell candidate, and provides the LTM candidate cell configuration to the UE 100 through RRC signaling. Secondly, the UE 100 performs processing of synchronizing with the candidate cell through early synchronization (Early sync). Thirdly, the gNB 200 receives an L1 measurement report from the UE 100, determines cell switch to a target cell based on the L1 measurement report, and transmits a Cell Switch Command indicating the target cell (LTM candidate cell configuration) to the UE 100 through the MAC CE. A cell switch trigger is conveyed through the MAC CE including at least a candidate configuration index together with a beam indicator. Fourthly, the UE 100 changes a serving cell in response to the cell switch command from the gNB 200 (source cell). As described above, when the gNB 200 selects the LTM candidate cell configuration as a target configuration, the cell switch is triggered. The LTM candidate cell configuration can be added, changed, and released by the gNB 200 through RRC signaling.

The following principles apply to LTM.
- Each LTM candidate cell configuration can be provided as a difference configuration (delta configuration) with respect to a reference configuration used to form a complete candidate cell configuration.
- When the complete candidate cell configuration is applied, a current UE configuration is replaced at a time of cell switch. Although replacement is performed in a reconfiguration procedure, the MAC, RLC or PDCP layer is not necessarily reset.
- For the purpose of avoiding additional delay of data recovery, the user plane is continued without being reset if configured through RRC signaling.
- In LTM, security is not updated.
- LTM between subsequent LTM candidate cell configurations can be executed without an RRC reconfiguration. That is, the UE 100 does not release the other LTM candidate cell configurations after the LTM is triggered.

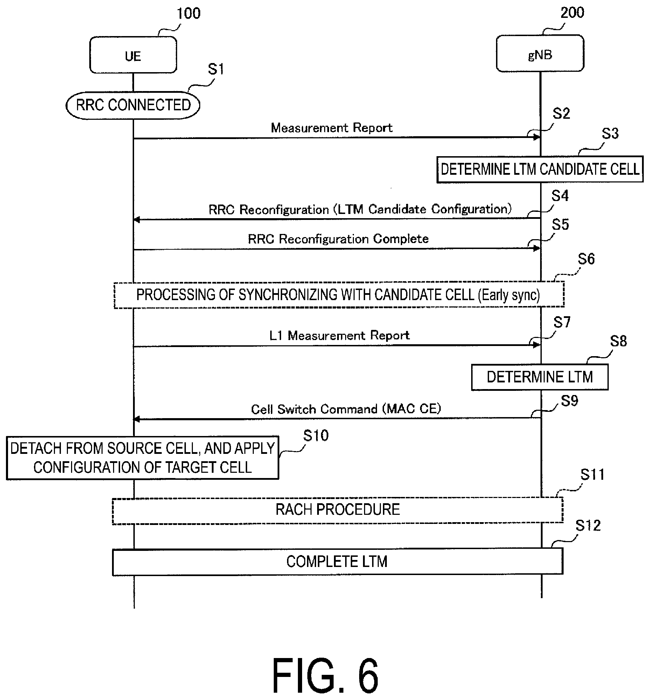

FIG. 6 is a diagram illustrating an example of a procedure of LTM whose specification is being developed in 3GPP Release 18. In the illustrated example, it is assumed that the UE 100 performs cell switch from a first cell (source cell) in the gNB 200 to a second cell. Here, the first cell and the second cell may be configured with respectively different Transmission and Reception Points (TRPs). The second cell will be also referred to as a "candidate cell (or LTM candidate cell)" until the cell switch through the LTM is determined, and the second cell will be also referred to as a "target cell" after the cell switch through the LTM is determined.

In step S1, the UE 100 is in the RRC connected state in the cell of the gNB 200.

In step S2, the UE 100 transmits to the gNB 200 a Measurement Report message that is the RRC message.

In step S3, the gNB 200 determines to use LTM based on the Measurement Report message, and starts preparing candidate cells.

In step S4, the gNB 200 transmits to the UE 100 an RRC Reconfiguration message including the LTM candidate cell configurations (LTM Candidate Configuration) of one or more candidate cells.

In step S5, the UE 100 saves the LTM candidate cell configuration, and transmits the RRC Reconfiguration Complete message to the gNB 200.

In step S6, the UE 100 may perform processing of synchronizing with the candidate cell before receiving the cell switch command. Such synchronization processing is referred to as early synchronization (Early sync). Here, the UE 100 may execute early Timing Advance (TA) acquisition in the candidate cell requested by the gNB 200 (source cell) before receiving the cell switch command in step S9. This early timing advance acquisition is performed through Contention Free Random Access (CFRA) triggered through a PDCCH order from the source cell. Note that, when DCI Format 1_0 is used and all the "Frequency domain resource assignment" fields in the DCI are set to "1", the DCI is handled as the PDCCH order. The UE 100 transmits a Random Access preamble (RA preamble) to the designated candidate cell. To minimize communication interruption of the source cell due to the CFRA to the candidate cell, the UE 100 does not receive from the candidate cell a Random Access Response (RAR) for the purpose of acquiring a TA value during the early synchronization. The TA value of the candidate cell (target cell) is indicated by the cell switch command in step S9. Note that the TA value is a value for adjusting an uplink transmission timing of the UE 100.

In step S7, the UE 100 performs Layer 1 (L1) measurement on the configured candidate cell, and transmits a measurement report of the physical layer (L1 Measurement Report) to the gNB 200. The L1 measurement Report is transmitted and received by the L1 that is the PHY layer. For example, the UE 100 transmits an L1-RSRP and/or the L1-SINR to the gNB 200 through a Physical Up-link Control CHannel (PUCCH) and/or a PUSCH.

In step S8, the gNB 200 determines to perform cell switch to the target cell (second cell).

In step S9, the gNB 200 transmits a Cell Switch Command (MAC CE) including a candidate configuration index of the target cell to the UE 100. The Cell Switch Command may include the TA value obtained through the early synchronization.

In step S10, the UE 100 switches to the configuration of the target cell. Specifically, the UE 100 detaches from the source cell (first cell) and applies the configuration of the target cell.

In step S11, if the cell switch needs to include execution of a random access procedure (if, for example, the Cell Switch Command does not include a valid TA value), the UE 100 executes the random access procedure with respect to the target cell. Note that, if it is not necessary to acquire the TA of the target cell at the time of cell switch (if, for example, the Cell Switch Command includes a valid TA value), the UE 100 can skip the random access procedure.

In step S12, the UE 100 indicates that the cell switch to the target cell has been normally completed. Thereafter, the UE 100 may execute steps S6 to S12 a plurality of times for subsequent LTM cell switch based on the configuration provided in step S4.

### (3) Operation of Mobile Communication System

The LTM of 3GPP Release 18 is limited to serving cell change between cells belonging to the same gNB 200 (the same CU). Hence, there exists a problem in that serving cell change between cells belonging to the different gNBs 200 (different CUs) cannot be implemented through LTM. Note that such LTM may be referred to as inter-network node LTM, specifically, inter-gNB LTM or inter-CU LTM. In the following embodiment, an operation for implementing inter-network node LTM will be described.

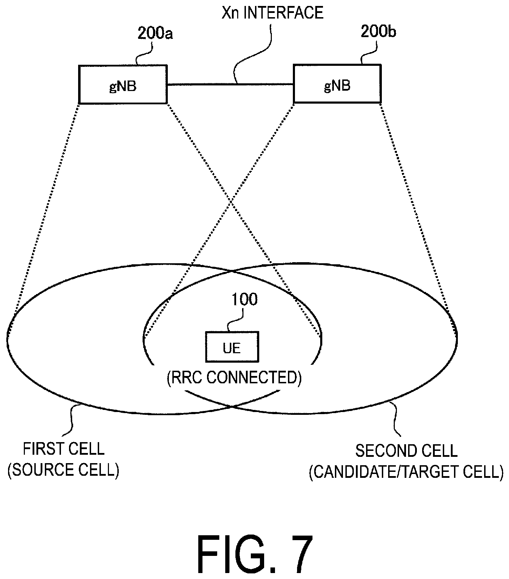

FIG. 7 is a diagram for describing an operation scenario of the mobile communication system 1 according to the embodiment.

The UE 100 performs serving cell change from the first cell (source cell) of a gNB 200a that is a source gNB to a second cell of a gNB 200b. The second cell will be also referred to as a "candidate cell (or LTM candidate cell)" until the cell switch through the LTM is determined, and the second cell will be also referred to as a "target cell" after the cell switch through the LTM is determined. An Xn station interface is established between the gNB 200a and the gNB 200b. It is assumed that communication between the gNB 200a and the gNB 200b is performed on the Xn interface.

In the embodiment, the gNB 200a performs wireless communication with the UE 100 in the RRC connected state in the first cell of the gNB 200a. The gNB 200a transmits, to the gNB 200b, a request message for requesting change of the serving cell of the UE 100 from the first cell of the gNB 200a to the second cell of the gNB 200b. Here, when the gNB 200a changes the serving cell through LTM, the gNB 200a transmits to the gNB 200b the request message indicating the serving cell change through the LTM. Note that LTM is the procedure of indicating cell switch from the gNB 200a to the UE 100 through the MAC CE.

Thus, the gNB 200b can recognize, based on the request message from the gNB 200a, that not the general handover but the serving cell change through the LTM is requested.

The request message may be a handover request (HO Request) message that is usable in a handover procedure of indicating handover from the gNB 200a to the UE 100 through an RRC message. The request message indicating the serving cell change through the LTM may be the HO Request message including the LTM indicator. Thus, the HO Request message used for general handover can be used for inter-network node LTM, so that it becomes easy to minimize change in the technical specification.

Alternatively, the request message indicating the serving cell change through the LTM may be an LTM request message different from the HO Request message. The LTM request message may be a request message used in a dedicated manner for LTM.

The request message indicating the serving cell change through the LTM may include information indicating whether the gNB 200b needs to configure a Contention Free Random Access (CFRA) resource. The CFRA resource is used during early synchronization performed on the second cell by the UE 100 before the cell switch indication through the MAC CE. Thus, the gNB 200b can determine based on the request message whether the CFRA resource needs to be configured.

The gNB 200a may transmit, to the gNB 200b, another request message for requesting that the gNB 200b configures or activates an early synchronization CFRA resource. Thus, the gNB 200b can appropriately configure or activate the early synchronization CFRA resource.

The gNB 200a may transmit a PDCCH order for indicating execution of the CFRA (i.e., transmission of a RA preamble) to the UE 100. The PDCCH order may include information for identifying the second cell. Thus, the UE 100 can identify whether an RA preamble transmission target is the first cell or the second cell.

The gNB 200a may receive from the gNB 200b a notification indicating that the early synchronization performed on the second cell by the UE 100 has succeeded. Thus, the gNB 200a can recognize whether the early synchronization performed on the second cell by the UE 100 has succeeded.

Alternatively, the gNB 200a may receive from the UE 100 a notification indicating that the early synchronization performed on the second cell by the UE 100 has succeeded.

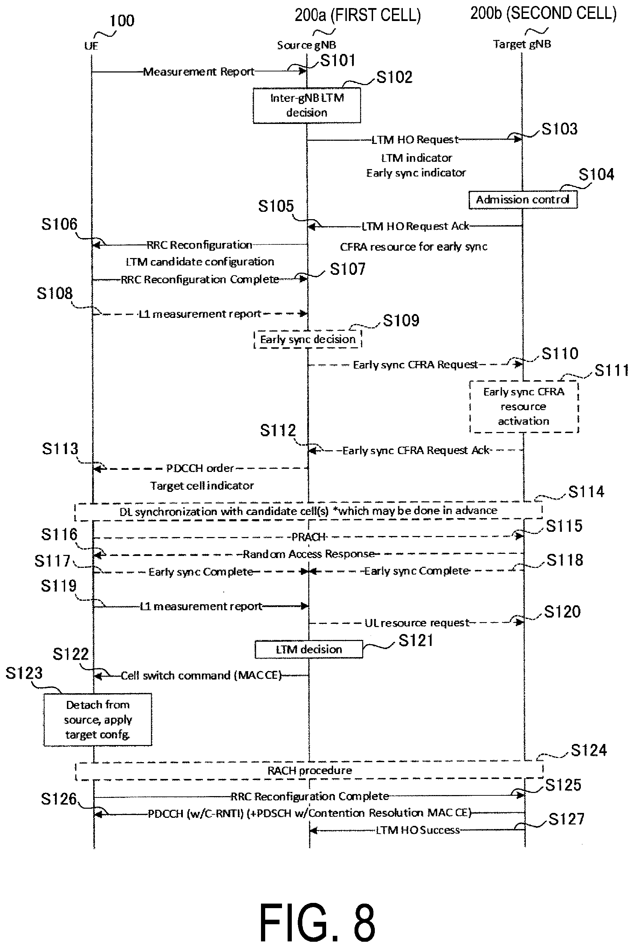

FIG. 8 is a diagram illustrating a specific example of an operation of the mobile communication system 1 according to the embodiment. In FIG. 8, steps that may be omitted are indicated by broken lines. Note that, although redundant description of the operation described with reference to FIG. 6 is omitted, the operation described with reference to FIG. 6 may be applied as appropriate.

In step S101, the UE 100 transmits an L3 (RRC) Measurement Report to the gNB 200a. The gNB 200a receives the L3 (RRC) Measurement Report.

In step S102, the gNB 200a determines to use inter-gNB LTM and starts preparing a candidate cell based on the L3 (RRC) Measurement Report in step S101. Here, it is assumed that the second cell of the gNB 200b is determined as the candidate cell.

In step S103, the gNB 200a transmits to the gNB 200b a request message (LTM HO Request) indicating serving cell change through LTM. The gNB 200b receives the request message (LTM HO Request). The request message (LTM HO Request) may be a Handover Request message that includes an LTM indicator and is used for general handover. Alternatively, the request message (LTM HO Request) may be a new message such as the LTM Handover Request message different from the Handover Request message. The request message (LTM HO Request) may include information indicating whether early synchronization needs to be configured, that is, whether the early synchronization CFRA resource needs to be configured (the request message may be information for proposing configuring the early synchronization). Note that the request message (LTM HO Request) may include RRC configuration information of the UE 100 and a cell identifier indicating the second cell, as in the general handover.

In step S104, the gNB 200b determines whether the request in step S103 can be accepted (Admission control). Here, the description will be given on the assumption that the request in step S103 has been approved. In this case, the gNB 200b may configure the early synchronization CFRA resource in the second cell. Note that, if the gNB 200b rejects the request in step S103, the gNB 200b may transmit a rejection message to the gNB 200a. The rejection message may include information indicating that inter-gNB LTM cannot be used.

In step S105, the gNB 200b transmits to the gNB 200a an acknowledgment response message (LTM HO Request Ack) indicating to accept the request in step S103. The gNB 200a receives the acknowledgment response message (LTM HO Request Ack). The acknowledgment response message (LTM HO Request Ack) may be a Handover Request Ack message that includes an LTM indicator and is used for general handover. Alternatively, the acknowledgment response message (LTM HO Request Ack) may be a new message such as an LTM Handover Request Ack message different from the Handover Request Ack message. The acknowledgment response message (LTM HO Request Ack) may include information indicating an early synchronization CFRA resource (e.g., a RA preamble and/or a Physical Random Access Channel (PRACH) resource) configured for the second cell by the gNB 200b. Note that the acknowledgment response message (LTM HO Request Ack) may include RRC reconfiguration information (RRC Reconfiguration) of the UE 100 to be applied in the second cell, as in the general handover.

In step S106, the gNB 200a transmits the RRC Reconfiguration message including the LTM candidate cell configuration of the second cell to the UE 100. The UE 100 receives the RRC Reconfiguration message. The RRC Reconfiguration message may include information indicating the early synchronization CFRA resource configured for the second cell by the gNB 200b.

In step S107, the UE 100 saves the LTM candidate cell configuration, and transmits the RRC Reconfiguration Complete message to the gNB 200a. The gNB 200a receives the RRC Reconfiguration Complete message.

In step S108, the UE 100 may transmit to the gNB 200a an L1 measurement report (or an L3 measurement report) for the gNB 200a to make determination on early synchronization. The gNB 200a may receive the L1 measurement report (or the L3 measurement report).

In step S109, the gNB 200a may determine early synchronization.

In step S110, the gNB 200a may transmit, to the gNB 200b, an Early sync CFRA Request message that is a request message for requesting preparation of the early synchronization CFRA resource, specifically, configuration and/or activation (validation) of the early synchronization CFRA resource. The gNB 200b may receive a request message (Early sync CFRA Request message). The request message (Early sync CFRA Request message) may include an identifier (Xn-AP UE ID) for specifying the UE 100 and/or an identifier (cell ID) for identifying the second cell.

In step S111, the gNB 200b may prepare the early synchronization CFRA resource.

In step S112, the gNB 200b may transmit to the gNB 200a a notification message such as an Early sync CFRA Request Ack message indicating that preparation of the early synchronization CFRA resource has been completed. The gNB 200a may receive the notification message (Early sync CFRA Request Ack message).

In step S113, the gNB 200a transmits a PDCCH order to the UE 100 to indicate execution of CFRA for early synchronization to the UE 100. The UE 100 receives the PDCCH order. The PDCCH order may include information (Target cell indicator) for identifying the second cell as a CFRA target. The information may be a cell ID (or a cell index) of the second cell. The information may be an index of a list of the LTM candidate cell configuration in step S106. The information may be information (index) for designating a TRP corresponding to the second cell.

In step S114, the UE 100 may perform downlink (DL) early synchronization with the second cell. For example, the UE 100 performs timing synchronization using an SSB (PSS/SSS) of the second cell. Note that the UE 100 may perform DL synchronization before this point of time.

In step S115, the UE 100 transmits the CFRA, specifically, the RA preamble on the PRACH to the second cell designated by the PDCCH order to perform uplink (UL) early synchronization with the second cell. The gNB 200b receives the RA preamble. Note that the UE 100 identifies the CFRA resources (e.g., the RA preamble and/or the PRACH resource) based on information configured with an SIB and the like, and information such as a "Random Access Preamble index" and a "PRACH Mask Index" in the PDCCH order.

In step S116, the gNB 200b may transmit to the UE 100 a RAR including a TA value derived based on the RA preamble. The UE 100 may receive the RAR. Step S116 may be an optional step that is executed only when there exists a configuration from the gNB 200a (e.g., the configuration in step S106). The UE 100 may transmit, to the gNB 200a, a notification (Early Sync Complete) indicating that UL early synchronization with the second cell has been completed (step S117). The notification (Early Sync Complete) may include the TA value notified with the RAR.

In step S118, the gNB 200b may transmit to the gNB 200a a notification message (Early Sync Complete) indicating that UL early synchronization with the UE 100 has been completed. The gNB 200a may receive the notification message (Early Sync Complete). The notification message (Early Sync Complete) may include the TA value derived based on the RA preamble in step S115.

In step S119, the UE 100 transmits the L1 measurement report to the gNB 200a. The gNB 200a receives the L1 measurement report.

In step S120, when determining based on, for example, the L1 measurement report in step S119 that a probability of executing LTM has increased, the gNB 200a may transmit a request message for a UL resource to the gNB 200b. The gNB 200b may receive the request message. The request for the UL resource may be a request for preparation or validation of a CFRA resource. The request for the UL resource may be a request for preparing or performing transmission of a UL grant to the UE 100. The request for the UL resource may be a request for preparation or validation of a UL Configured Grant (CG) resource. Note that transmission of the request message in step S120 may be performed at the same time as determination on execution of LTM in step S121. Transmission may be performed after the determination on the execution of the LTM in step S121.

In step S121, the gNB 200a determines execution of LTM based on the L1 measurement report in step S119.

In step S122, the gNB 200a transmits a Cell switch command (MAC CE) to the UE 100 in response to the determination on the execution of the LTM. The UE 100 receives the Cell switch command. The Cell switch command may include the TA value notified to the gNB 200a in step S117 or S118.

In step S123, the UE 100 detaches from the first cell (source cell) in response to reception of the Cell switch command, and applies the LTM candidate cell configuration of the second cell (target cell).

In step S124, if the cell switch command does not include the TA value (valid TA value), the UE 100 may execute a random access procedure with respect to the second cell.

In step S125, the UE 100 transmits the RRC Reconfiguration Complete message to the second cell. The gNB 200b receives the RRC Reconfiguration Complete message.

In step S126, the gNB 200b may transmit, to the UE 100 on the PDCCH, DCI including a Cyclic Redundancy Code (CRC) scrambled with a C-RNTI allocated to the UE 100, and transmit a Contention Resolution MAC CE to the UE 100 on a PDSCH allocated with the DCI. The UE 100 may receive the DCI and the Contention Resolution MAC CE.

In step S127, the gNB 200b may transmit, to the gNB 200a, a notification message (LTM HO Success) indicating that inter-network node LTM to the second cell has been completed. The gNB 200a may receive the notification message (LTM HO Success).

### (4) Other Embodiments

The operation flows described above can be separately and independently implemented, and also be implemented in combination of two or more of the operation flows. For example, some steps of one operation flow may be added to another operation flow or some steps of one operation flow may be replaced with some steps of another operation flow. In each flow, all steps do not necessarily need to be performed, and only some of the steps may be performed. The order between the steps may be changed in each flow as appropriate.

Although the example in which the base station is an NR base station (gNB) has been described in the embodiment and example described above, the base station may be an LTE base station (eNB) or a 6G base station. The base station may be a relay node such as an Integrated Access and Backhaul (IAB) node. The base station may be a DU of the IAB node. The UE 100 may be a Mobile Termination (MT) of the IAB node.

That is, the UE 100 may be a terminal function unit (a type of communication module) for a base station to control a repeater that performs signal relay. Such a terminal function unit is referred to as an MT. Examples of the MT include a Network Controlled Repeater (NCR)-MT and a Reconfigurable Intelligent Surface (RIS)-MT in addition to the IAB-MT.

The term "network node" mainly means a base station, but may also mean a core network apparatus or a part (a CU, a DU, or an RU) of the base station. The network node may include a combination of at least a part of the core network apparatus and at least a part of the base station.

A program causing a computer to execute each of the processing performed by the UE 100 or the gNB 200 may be provided. The program may be recorded in a computer-readable medium. Use of the computer-readable medium enables the program to be installed on a computer. Here, the computer-readable medium on which the program is recorded may be a non-transitory recording medium. The non-transitory recording medium is not particularly limited, and may be, for example, a recording medium such as a CD-ROM or a DVD-ROM. Circuits for executing processing performed by the UE 100 or the gNB 200 may be integrated, and at least a part of the UE 100 or the gNB 200 may be configured as a semiconductor integrated circuit (a chipset or a System on a chip (SoC)).

The functions implemented by the UE 100 or the gNB 200 (the network node) may be implemented in a circuitry or a processing circuitry programmed to implement the described functions, and including a general-purpose processor, a special-purpose processor, an integrated circuit, Application Specific Integrated Circuits (ASICs), a Central Processing Unit (CPU), a conventional circuit, and/or combinations thereof. The processor may include transistors and other circuits and may be considered a circuitry or a processing circuitry. The processor may be a programmed processor that executes a program stored in the memory. As used herein, a circuitry, a unit, and means are hardware programmed to implement, or hardware performing, the described functions. The hardware may be any hardware disclosed herein or any hardware programmed to implement or known to execute the described functions. When the hardware is a processor that is considered to be a type of circuitry, the circuitry, means, or a unit is a combination of hardware and software used to configure the hardware and/or the processor.

The phrases "based on" and "depending on/in response to" used in the present disclosure do not mean "based only on" and "only depending on/in response to" unless specifically stated otherwise. The phrase "based on" means both "based only on" and "based at least in part on". The phrase "depending on/in response to" means both "only depending on/in response to" and "at least partially depending on/in response to". The terms "include," and "comprise" and variations thereof do not mean "include only items stated" but instead mean "may include only items stated" or "may include not only the items stated but also other items." The term "or" used in the present disclosure is not intended to be "exclusive or". Any references to elements using designations such as "first" and "second" as used in the present disclosure do not generally limit the quantity or order of those elements. These designations may be used herein as a convenient method of distinguishing between two or more elements. Thus, a reference to first and second elements does not mean that only two elements may be employed there or that the first element needs to precede the second element in some manner. For example, when the English articles such as "a", "an", and "the" are added in the present disclosure through translation, these articles include the plural unless clearly indicated otherwise in context.

The embodiment has been described above in detail with reference to the drawings, but specific configurations are not limited to those described above, and various design variations can be made without departing from the gist of the present disclosure.

The present application claims priority to Japanese Patent Application No. 2023-170459 (filed on September 29, 2023), the contents of which are incorporated herein by reference in their entirety.

### (5) Supplements

Features relating to the embodiment described above are described below as supplementary notes.

### Supplementary Note 1

A communication method executed by a network node in a mobile communication system includes the steps of:
performing wireless communication with a user equipment in a Radio Resource Control (RRC) connected state in a first cell of the network node; and
transmitting, to another network node, a request message requesting change of a serving cell of the user equipment from the first cell to a second cell of the other network node, wherein the network node is configured to, when changing the serving cell through L1/L2-Triggered Mobility (LTM), transmit the request message indicating the change of the serving cell through the LTM, and
the LTM is a procedure indicating cell switch from the network node to the user equipment through a Medium Access Control (MAC) Control Element (CE).

### Supplementary Note 2

The communication method according to Supplementary Note 1, wherein
the request message is a handover request message that is usable in a handover procedure indicating handover from the network node to the user equipment through an RRC message, and
the request message indicating the change of the serving cell through the LTM is the handover request message including an LTM indicator.

### Supplementary Note 3

The communication method according to Supplementary Note 1, wherein the request message indicating the change of the serving cell through the LTM is an LTM request message different from a handover request message that is usable in a handover procedure indicating handover from the network node to the user equipment through an RRC message.

### Supplementary Note 4

The communication method according to any one of Supplementary Notes 1 to 3, wherein
the request message indicating the change of the serving cell through the LTM includes information indicating whether the other network node needs to configure a Contention Free Random Access (CFRA) resource, and
the CFRA resource is used during early synchronization performed on the second cell by the user equipment before a cell switch indication through the MAC CE.

### Supplementary Note 5

The communication method according to any one of Supplementary Notes 1 to 4, further includes transmitting, to the other network node, another request message requesting the other network node to configure or activate a Contention Free Random Access (CFRA) resource, wherein the CFRA resource is used during early synchronization performed on the second cell by the user equipment before a cell switch indication through the MAC CE.

### Supplementary Note 6

The communication method according to any one of Supplementary Notes 1 to 5 further includes transmitting, to the user equipment, a Physical Random Access CHannel (PDCCH) order indicating execution of Contention Free Random Access (CFRA),
wherein the PDCCH order includes information for identifying the second cell.

### Supplementary Note 7

The communication method according to any one of Supplementary Notes 1 to 6 further includes receiving, from the other network node, a notification indicating that early synchronization performed on the second cell by the user equipment has succeeded.

### Supplementary Note 8

The communication method according to any one of Supplementary Notes 1 to 6 further includes receiving, from the user equipment, a notification indicating that early synchronization performed on the second cell by the user equipment has succeeded.

### Supplementary Note 9

A network node used in a mobile communication system includes:
a first communicator configured to perform wireless communication with a user equipment in a Radio Resource Control (RRC) connected state in a first cell of the network node; and
a second communicator configured to transmit, to another network node, a request message requesting change of a serving cell of the user equipment from the first cell to a second cell of the other network node, wherein
the second communicator is configured to, when changing the serving cell through L1/L2-Triggered Mobility (LTM), transmit the request message indicating the change of the serving cell through the LTM, and
the LTM is a procedure indicating cell switch from the network node to the user equipment through a Medium Access Control (MAC) Control Element (CE).

### REFERENCE SIGNS

1: Mobile communication system
5: Network
10: RAN
20: CN
100: UE
110: Receiver
120: Transmitter
130: Controller
200: gNB
210: Transmitter
220: Receiver
230: Controller
240: Backhaul communicator

## Claims

1. A communication method executed by a network node in a mobile communication system, the communication method comprising the steps of:
performing wireless communication with a user equipment in a Radio Resource Control (RRC) connected state in a first cell of the network node; and
transmitting, to another network node, a request message requesting change of a serving cell of the user equipment from the first cell to a second cell of the other network node, wherein
the network node is configured to, when changing the serving cell through L1/L2-Triggered Mobility (LTM), transmit the request message indicating the change of the serving cell through the LTM, and
the LTM is a procedure indicating cell switch from the network node to the user equipment through a Medium Access Control (MAC) Control Element (CE).

2. The communication method according to claim 1, wherein
the request message is a handover request message that is usable in a handover procedure indicating handover from the network node to the user equipment through an RRC message, and
the request message indicating the change of the serving cell through the LTM is the handover request message comprising an LTM indicator.

3. The communication method according to claim 1, wherein
the request message indicating the change of the serving cell through the LTM is an LTM request message different from a handover request message that is usable in a handover procedure indicating handover from the network node to the user equipment through an RRC message.

4. The communication method according to any one of claims 1 to 3, wherein
the request message indicating the change of the serving cell through the LTM comprises information indicating whether the other network node needs to configure a Contention Free Random Access (CFRA) resource, and
the CFRA resource is used during early synchronization performed on the second cell by the user equipment before a cell switch indication through the MAC CE.

5. The communication method according to any one of claims 1 to 3, further comprising:
transmitting, to the other network node, another request message requesting the other network node to configure or activate a Contention Free Random Access (CFRA) resource, wherein
the CFRA resource is used during early synchronization performed on the second cell by the user equipment before a cell switch indication through the MAC CE.

6. The communication method according to any one of claims 1 to 3, further comprising:
transmitting, to the user equipment, a Physical Random Access CHannel (PDCCH) order indicating execution of Contention Free Random Access (CFRA), wherein
the PDCCH order comprises information for identifying the second cell.

7. The communication method according to any one of claims 1 to 3, further comprising:
receiving, from the other network node, a notification indicating that early synchronization performed on the second cell by the user equipment has succeeded.

8. The communication method according to any one of claims 1 to 3, further comprising:
receiving, from the user equipment, a notification indicating that early synchronization performed on the second cell by the user equipment has succeeded.

9. A network node used in a mobile communication system, the network node comprising:
a first communicator configured to perform wireless communication with a user equipment in a Radio Resource Control (RRC) connected state in a first cell of the network node; and
a second communicator configured to transmit, to another network node, a request message requesting change of a serving cell of the user equipment from the first cell to a second cell of the other network node, wherein
the second communicator is configured to, when changing the serving cell through L1/L2-Triggered Mobility (LTM), transmit the request message indicating the change of the serving cell through the LTM, and
the LTM is a procedure indicating cell switch from the network node to the user equipment through a Medium Access Control (MAC) Control Element (CE).
